# EUROPÄISCHE PATENTSCHRIFT

(11) **EP 2 039 497 B1**
(45) Veröffentlichungstag und Bekanntmachung des Hinweises auf die Patenterteilung: **26.09.2018**
(21) Anmeldenummer: 08012267.4
(22) Anmeldetag: 08.07.2008
(51) Int. Cl.: B29C 70/86, B29C 70/30

(54) **Verfahren zur Herstellung von Flügelelementen**
Method for manufacturing wing elements
Procédé de fabrication d'éléments d'ailes

(30) Priorität: 19.09.2007 DE 102007044698
(43) Veröffentlichungstag der Anmeldung: 25.03.2009
(73) Patentinhaber: SKF Marine GmbH, 20457 Hamburg (DE)
(72) Erfinder: Hufenbach, Werner, Prof. Dr., 01324 Dresden (DE); Kunze, Klaus, Dr., 01157 Dresden (DE); Zichner, Marco, Dipl.-Ing., 01109 Dresden (DE); Knippschild, Lothar, Dr., 45277 Essen (DE); Zollenkopf, Michael, Dipl.-Ing., 22607 Hamburg (DE)
(74) Vertreter: Marschall, Stefan

(56) Entgegenhaltungen:
- EP-A1- 1 808 598
- GB-A- 836 501

## Beschreibung

Die Erfindung bezieht sich auf ein Verfahren zur Herstellung von Flügelelementen, insbesondere Flossenstabilisatoren von Schiffen, in faserverstärkter Kunststoffbauweise, bestehend aus einem Schaft mit einer verbundenen Flossenhülle.

Bei derartigen Ausbildungen ist es bekannt, eine Stahlbauweise einzusetzen, um eine sichere Übertragung der anstehenden Drehmomente durchzuführen. Es hat sich gezeigt, daß diese Ausbildungen ein hohes Gewicht aufweisen. Bei Kunststoffausbildungen ist das Fertigungsverfahren aufgrund hoher Werkzeugkosten aufwendig, so daß keine wirtschaftliche Nutzung für Kleinserien durchgeführt werden kann.

Die Druckschrift EP 1 808 598 A1 offenbart Träger für Flügel einer Windkraftanlage sowie ein Herstellungsverfahren für derartige Träger. Dabei wird ein Formelement 21 maschinell mit mehreren Lagen von harzgetränktem Glasfasermaterial 15 sowie harzgetränktem Kohlefasermaterial 14 beschichtet.

Die Aufgabe der Erfindung ist es, eine gattungsgemäße Anordnung in Leichtbauweise unter Verwendung von Kunststoffen mit geringem Gewicht herzustellen, wobei die Fertigung aufgrund geringer Werkzeugkosten auch für Kleinserien wirtschaftlich einsetzbar ist und auch eine sichere Übertragung anstehender Drehmomente gewährleistet.

Die Lösung dieser Aufgabe wird durch ein Verfahren gemäß Anspruch 1 durchgeführt.

Hierdurch wird ermöglicht, daß eine Gewichtseinsparung über 50 % gegenüber einer Stahllösung erreicht und ein hohes Torsionsmoment gewährleistet wird.

Ein vorteilhaftes Verfahren wird dadurch geschaffen, daß der Innenkörper in Form eines Wickelkörpers durch eine geschlossene Umfangslage abdeckbar ist.

Ein einfaches Verfahren zur Herstellung wird dadurch geschaffen, daß über eine Klebeverbindung die zugeordneten Flächen des Innenkörpers mit der Innenfläche der Flossenhülle verbunden werden.

Eine vorteilhafte Ausbildung des Verfahrens erfolgt dadurch, daß der verwendete Schaft als Grundkörper mindestens teilweise durch ein pyramidenstumpfförmiges Vierkantprofil gebildet ist, auf den ein Körper aufgebracht wird.

Ferner wird erfindungsgemäß vorgeschlagen, daß der Wickelkörper zur Herstellung des Innenkörpers in einer doppelt umschlungenen Faserorientierung um den Schaft mit dem aufgebrachten Körper in Kunststoffbauweise hergestellt wird.

Zur Minimierung von Spannungsspitzen im Verbindungsbereich mit der Flossenhülle wird dadurch geschaffen, daß der gebildete geschlossene Innenkörper mit Durchtrennungen vor einem Einsetzen in die Flossenhülle versehen wird.

Zur Herstellung einer geforderten Steifigkeit wird vorgeschlagen, daß in die gebildeten Hohlräume des Flügelelementes Hartschaum eingebracht wird.

In der Zeichnung ist ein Ausführungsbeispiel der Erfindung schematisch dargestellt. Es zeigen:

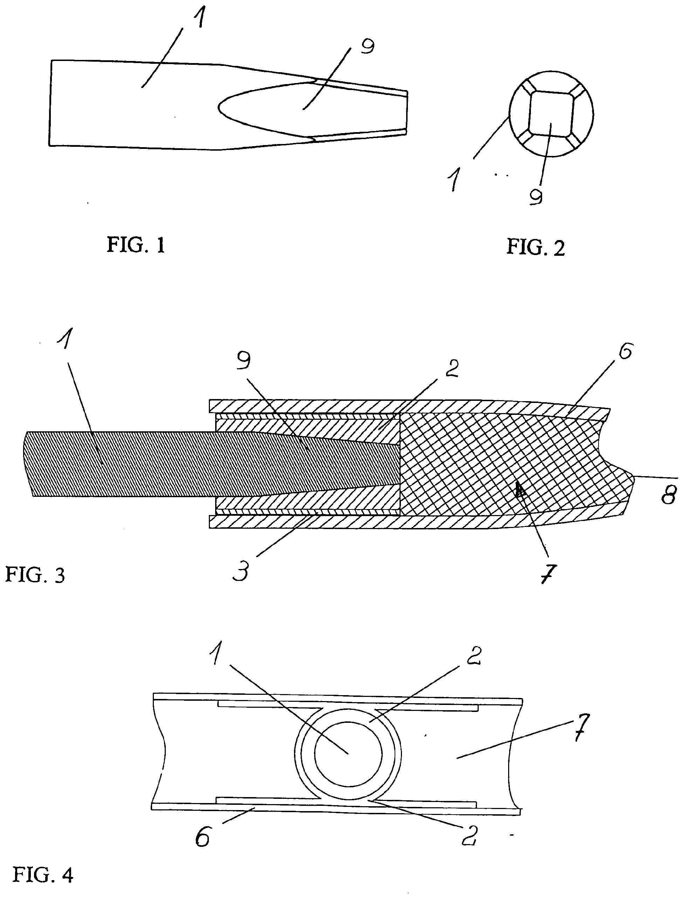

- Fig. 1: einen Metallschaft als Grundkörper mit einem pyramidenstumpfförmigen Vierkantprofil als Seitenansicht;
- Fig. 2: eine Frontansicht gemäß Fig. 1;
- Fig. 3: Teilschnitt einer fertigen Ausbildung mit einem Metallschaft und aufgebrachtem Körper in Kunststoffbauweise in einer Flossenhülle;
- Fig. 4: eine Ansicht in Pfeilrichtung der Fig. 3;
- Fig. 5: eine perspektivische Darstellung einer Vorrichtung mit einem eingespannten Schaft und aufgebrachtem Körper mit formgebenden Wickelstützen zur Herstellung eines Innenkörpers durch eine Wickelstruktur;
- Fig. 6: eine Prinzipdarstellung einer Faserorientierung bei Herstellung eines Innenkörpers;
- Fig. 7: eine Darstellung eines gebildeten Innenkörpers mit randseitig aufgeschnittenen Bereichen und
- Fig. 8: eine Frontansicht auf den Innenkörper gemäß Fig. 7.

Bei der dargestellten Ausbildung eines Flossenstabilisators ist ein zur Antriebsbetätigung angeordneter Schaft 1 aus Metall mit einem Körper 2 in Kunststoffbauweise als Schaftinterface formschlüssig verbunden. In diesem Fall besitzt der Schaft 1 im Bereich des aufgebrachten Körpers 2 ein pyramidenstumpfförmiges Vierkantprofil 9.

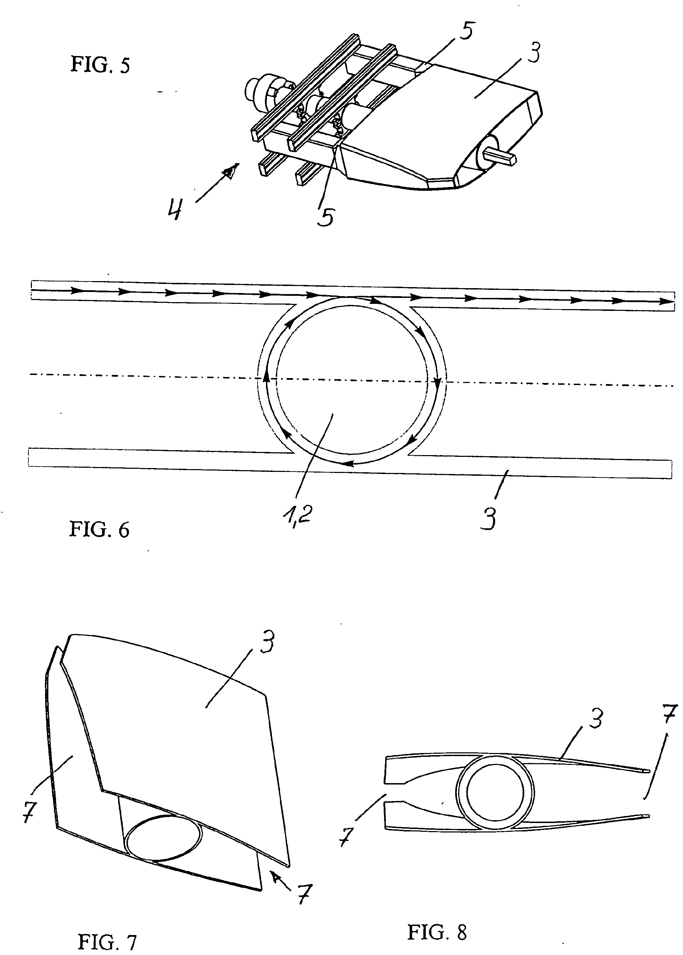

Der Schaft 1 mit dem formschlüssig aufgebrachten Körper 2 wird zur Bildung eines Innenkörpers 3 in eine Vorrichtung 4 eingesetzt, die entsprechend der Form des Innenkörpers 3 außenliegende Stützelemente 5 als Wickelstützen aufweist und somit quasi einen Kern bildet. Der Innenkörper 3wird als Wickelkörper aus Kunststoff im Faserverbundbauweise hergestellt, wobei eine doppelt umschlungene Faserorientierung um den Schaft 1 mit dem aufgebrachten Körper 2 erfolgt, wie es in Fig. 6 dargestellt ist. Auf die derartig als Wickelkörper hergestellten Innenkörper 3 wird gegebenenfalls eine geschlossene Umfangslage aufgebracht.

Der derartig gebildete Innenkörper 3 wird aus der Vorrichtung 4 entfernt und ist dabei entsprechend einer Innenform einer zuzuordnenden Flossenhülle 6 als Aufnahme bemessen. Vor dem Einsetzen in die Flossenhülle 6 werden Außenbereiche des Innenkörpers 3 aufgetrennt, so daß entsprechende Öffnungen 7 entstehen. Der derart vorbereitete Innenkörper 3 wird in die Flossenhülle 6 als Kunststoff-Hüllkörper eingesetzt und über eine Klebeverbindung zwischen zugeordneten Flächen von Innenkörper 3 und Flossenhülle 6 verbunden.

Nach Fertigstellung durch die Verbindung zwischen Innenkörper 3 und Flossenhülle 6 werden zur Erhöhung der Steifigkeit die Hohlräume 7 des Flügelementes mit Hartschaum 8 ausgefüllt.

## Patentansprüche

1. Verfahren zur Herstellung von Flügelelementen, insbesondere Flossenstabilisatoren von Schiffen, in faserverstärkter Kunststoffbauweise, bestehend aus einem Schaft mit einer verbundenen Flossenhülle,
wobei auf den Schaft (1) als Grundkörper formschlüssig ein Körper (2) in Kunststoffbauweise aufgebaut wird,
**dadurch gekennzeichnet, dass** der Schaft (1) mit dem aufgebauten Körper (2) unter Zuordnung eines entfernbaren Kerns (5) zur Herstellung eines Innenkörpers (3) als Wickelkörper aus Kunststoff in Faserverbundbauweise entsprechend einer Innenform einer Flossenhülle (6) herstellbar ist und der vorgefertigte Innenkörper (3) in einen Hohlraum der Flossenhülle (6) mit einer vorgegebenen Tragflächenaußenkontur einsetzbar sowie die zugeordneten Flächen von Innenkörper (3) und Flossenhülle (6) verbunden werden oder eine Tragflächenaußenkontur auf den Innenkörper (3) aufbringbar ist,
wobei der Wickelkörper zur Herstellung des Innenkörpers (3) in einer doppelt umschlungenen Faserorientierung um den Schaft (1) mit dem aufgebauten Körper (2) in Kunststoffbauweise hergestellt wird.

2. Verfahren nach Anspruch 1, **dadurch gekennzeichnet, daß** der Innenkörper (3) in Form eines Wickelkörpers durch eine geschlossene Umfangslage abdeckbar ist.

3. Verfahren nach Anspruch 1 oder 2, **dadurch gekennzeichnet, daß** über eine Klebeverbindung die zugeordneten Flächen des Innenkörpers (3) mit den Innenflächen der Flossenhülle (6) verbunden werden.

4. Verfahren nach einem der Ansprüche 1 bis 3, **dadurch gekennzeichnet, daß** der verwendete Schaft (1) als Grundkörper mindestens teilweise durch ein pyramidenstumpfförmiges Vierkantprofil (9) gebildet ist, auf den ein Körper (2) aufgebracht wird.

5. Verfahren nach einem der Ansprüche 1 bis 4, **dadurch gekennzeichnet, daß** der gebildete geschlossene Innenkörper (3) mit Durchtrennungen vor einem Einsetzen in die Flossenhülle (6) versehen wird.

6. Verfahren nach einem der Ansprüche 1 bis 5, **dadurch gekennzeichnet, daß** in die gebildeten Hohlräume (7) des Flügelelementes Hartschaum (8) eingebracht wird.

## Claims

1. A method for the manufacture of wing elements, in particular fin stabilisers of ships, in a fibre-reinforced plastic mode of construction, consisting of a shaft with a connected fin sleeve, wherein
a body (2) in a plastic mode of construction is built onto the shaft (1) in a form fit as a base body,
**characterised in that**, the shaft (1) with the built-up body (2), with the assignment of a removable core (5) for the manufacture of an inner body (3), can be produced as a wound body made of plastic in a fibre composite mode of construction according to an inner shape of a fin sleeve (6), and the prefabricated inner body (3) can be inserted into a cavity of the fin sleeve (6) with a predetermined wing outer contour, and the assigned surfaces of the inner body (3) and fin sleeve (6) are connected, or a wing outer contour can be applied onto the inner body (3),
wherein for the manufacture of the inner body (3) the wound body is manufactured in a plastic mode of construction with a double-wrapped fibre orientation around the shaft (1) with the built-up body (2).

2. The method in accordance with claim 1, **characterised in that**, the inner body (3) in the form of a wound body can be covered by a closed peripheral layer.

3. The method in accordance with claim 1 or 2, **characterised in that**, the assigned surfaces of the inner body (3) are connected to the inner surfaces of the fin sleeve (6) by way of adhesive bonding.

4. The method in accordance with one of the claims 1 to 3, **characterised in that**, the shaft (1) used as a basic body is at least partially formed as a truncated pyramid-shaped square profile (9), onto which a body (2) is affixed.

5. The method in accordance with one of the claims 1 to 4, **characterised in that**, the formed closed inner body (3) is provided with through-cuts before insertion into the fin sleeve (6).

6. The method in accordance with one of the claims 1 to 5, **characterised in that**, rigid foam (8) is introduced into the cavities (7) formed in the wing element.

## Revendications

1. Procédé de fabrication d'éléments d'aile, en particulier de stabilisateurs à ailerons de bateaux, dans une construction en plastique renforcée par fibres, composée d'une tige avec une enveloppe d'aileron reliée,
dans lequel un corps (2) en plastique est monté par adhérence des formes sur la tige (1) en tant que corps de base,
**caractérisé en ce que** la tige (1) avec le corps (2) monté peut être fabriquée en attribuant un noyau amovible (5) pour fabriquer un corps intérieur (3) en tant que corps enroulé en plastique dans une construction renforcée par fibres correspondant à une forme intérieure d'une enveloppe d'aileron (6) et le corps intérieur (3) pré-fabriqué peut être intégré dans une cavité de l'enveloppe d'aileron (6) avec un contour extérieur de surface porteuse prédéfini, ainsi que les surfaces attribuées du corps intérieur (3) et de l'enveloppe d'aileron (6) sont reliées ou bien un contour extérieur de surface porteuse peut être placé sur le corps intérieur (3),
dans lequel le corps enroulé pour fabriquer le corps intérieur (3) est fabriqué dans une orientation de fibres enroulées en double autour de la tige (1) avec le corps (2) en plastique monté.

2. Procédé selon la revendication 1, **caractérisé en ce que** le corps intérieur (3) sous forme d'un corps enroulé peut être recouvert par une couche périphérique fermée.

3. Procédé selon la revendication 1 ou 2, **caractérisé en ce que** les surfaces attribuées du corps intérieur (3) sont reliées aux surfaces intérieures de l'enveloppe d'aileron (6) par une liaison par collage.

4. Procédé selon l'une des revendications 1 à 3, **caractérisé en ce que** la tige (1) employée en tant que corps de base est formée au moins partiellement par un profilé à quatre côtés (9) en forme de pyramide tronquée sur lequel un corps (2) est placé.

5. Procédé selon l'une des revendications 1 à 4, **caractérisé en ce que** le corps intérieur (3) fermé formé est doté de séparations avant l'insertion dans l'enveloppe d'aileron (6).

6. Procédé selon l'une des revendications 1 à 5, **caractérisé en ce que** de la mousse rigide (8) est insérée dans les cavités (7) formées de l'élément d'aile.
